# EUROPÄISCHE PATENTSCHRIFT

(11) **EP 3 004 467 B1**
(45) Veröffentlichungstag und Bekanntmachung des Hinweises auf die Patenterteilung: **06.12.2017**
(21) Anmeldenummer: 14741515.2
(22) Anmeldetag: 28.05.2014
(51) Int. Cl.: E02D 27/50, E02D 31/00, E04C 5/12, F03D 13/20, E02D 27/42

(54) **BETONFUNDAMENT UND VERFAHREN ZUR HERSTELLUNG EINES BETONFUNDAMENTS FÜR EINEN WINDKRAFTTURM SOWIE POSITIONIERVORRICHTUNG ZUR POSITIONIERUNG VON HÜLLROHREN IN EINEM BETONFUNDAMENT**
CONCRETE FOUNDATION, METHOD FOR PRODUCING A CONCRETE FOUNDATION FOR A WIND POWER TOWER, AND POSITIONING DEVICE FOR POSITIONING JACKET PIPES IN A CONCRETE FOUNDATION
FONDATION EN BÉTON ET PROCÉDÉ DE FABRICATION D'UNE FONDATION EN BÉTON POUR UNE TOUR D'ÉOLIENNE AINSI QUE DISPOSITIF DE POSITIONNEMENT DE GAINES DANS UNE FONDATION EN BÉTON

(30) Priorität: 29.05.2013 DE 102013105512
(43) Veröffentlichungstag der Anmeldung: 13.04.2016
(73) Patentinhaber: Max Bögl Wind AG, 92369 Sengenthal (DE)
(72) Erfinder: MENZEL, Jürgen, 92318 Neumarkt (DE)
(74) Vertreter: Bergmeier, Werner
(86) Internationale Anmeldenummer: PCT/EP2014/001440
(87) Internationale Veröffentlichungsnummer: WO 2014/191102

(56) Entgegenhaltungen:
- DE-U1- 20 122 941
- DE-U1-202009 013 844

## Beschreibung

Die vorliegende Erfindung betrifft ein Verfahren zur Herstellung eines Betonfundaments für einen mittels Spanngliedern vorgespannten Windkraftturm, insbesondere einen extern vorgespannten Windkraftturm aus Betonfertigteilen, bei welchem eine Schalung für das Betonfundament errichtet wird, bei welchem Kernelemente zur Herstellung von Durchgangsöffnungen in dem Betonfundament für die Spannglieder an der Schalung positioniert und fixiert werden, und bei welchem danach das Betonfundament gegossen wird. Weiterhin betrifft die Erfindung ein Betonfundament für einen mittels Spanngliedern vorgespannten Windkraftturm sowie eine Positioniervorrichtung zur Ausrichtung von Kernelementen in einem Betonfundament.

Im Stand der Technik sind verschiedene Ausführungen von Windkrafttürmen aus vorgefertigten Segmenten bekannt geworden. Bei diesen Türmen muss das unterste Turmsegment bzw. der unterste Turmschuss stabil mit einem separat gefertigten Fundament verbunden werden, um die auftretenden Kräfte dort einleiten zu können. Der Verbindung des Turms bzw. des untersten Turmsegments mit dem Fundament kommt daher eine hohe Bedeutung zu. Bei der Herstellung eines Fundaments in Ortbeton sind daher entsprechende Befestigungseinrichtungen für den Windkraftturm vorzusehen. Beispielsweise ist es bei Windkrafttürmen aus Stahlsegmenten bekannt, einen Ankerkorb mit einer Vielzahl von Gewindestangen in das Fundament einzubetonieren, an denen später der Fußabschnitt des Turms mit seinen Befestigungsbohrungen festgelegt wird. Der Ankerkorb wird vorgefertigt und ist auf die Befestigungspunkte des Fußabschnitts abgestimmt.

Die DE 20 2009 013 844 U1 schlägt für einen derartigen Stahlturm vor, anstelle eines Ankerkorbs lediglich Hüllrohre für einzelne Ankerbolzen einzugießen. Die Positionierung der einzelnen Hüllrohre für die Ankerbolzen erfolgt wiederum mittels eines derartigen Ankerkorbs. Bei Verwendung von Spanngliedern wie Spannlitzen, Spanndrähten oder Spannseilen ist jedoch eine sehr exakte Ausrichtung der Hüllrohre erforderlich.

Die DE 101 26 912 A1 beschreibt einen Windkraftturm aus Spannbeton, der mittels außerhalb der Wandung des Turms zwischen einem Kopflager und einem Fundament verlaufender Spannglieder vorgespannt ist. Das dort als aufwändig beschriebene Justieren von Leerrohren in den Schalungen für die Turmwandung kann daher entfallen. Zum Einbau und zur Ausrichtung von Hüllrohren in dem Fundament wird in dieser Schrift nichts gesagt.

In der Praxis kommt es beim Führen von Spanngliedern in Spannkanälen oftmals zu Problemen. Beispielsweise kann es bereits bei geringen Achsabweichungen zwischen Spannglied und Spannkanal zu einem abknickenden Verlauf und entsprechenden Beschädigungen der Spannglieder kommen. Dies tritt beispielsweise an Übergangsstellen zwischen zwei aneinander grenzenden Spannkanalstücken oder zwischen einem frei gespannten und einem in einem Spannkanal verlaufenden Spanngliedabschnitt auf. Die Hüllrohre bzw. Spannkanäle werden daher üblicherweise mit trichterartigen Aufweitungen an einem Ende versehen, um eine derartiges Abknicken zu vermindern. Die DE 201 22 941 U1 zeigt Segmente eines Windkraftturms, deren Spannkanäle entsprechend ausgeführt sind. Auch die WO 00/14357 A2 zeigt Spannkanäle bzw. Hüllrohre mit einer trichterförmigen Aufweitung an einem Spannkanal.

Aufgabe der vorliegenden Erfindung ist es, ein Verfahren der eingangs genannten Art zu verbessern und eine Positionierhilfe für Kernelemente vorzuschlagen.

Die Aufgabe wird gelöst mit den Merkmalen der unabhängigen Ansprüche.

Bei einem Verfahren zur Herstellung eines Betonfundaments für einen mittels Spanngliedern vorgespannten Windkraftturm, insbesondere einen extern vorgespannten Windkraftturm aus Betonfertigteilen, wird eine Schalung für ein Betonfundament errichtet. Dabei werden Kernelemente zur Herstellung von Durchgangsöffnungen in dem Betonfundament für die Spannglieder an der Schalung positioniert und fixiert und danach wird das Betonfundament gegossen.

Erfindungsgemäß wird nun zur lagegenauen und exakten Positionierung der Kernelemente wenigstens eine erste Positionierhilfe mit einer Adaptervorrichtung für ein Kernelement und mit wenigstens einem Referenzabschnitt an der Schalung bereitgestellt. Die erste Positionierhilfe wird mittels des Referenzabschnitts lagegenau in der Schalung positioniert und fixiert und das jeweils zu positionierende Kernelement wird an der Adaptervorrichtung der Positionierhilfe angeordnet.

Es ist nach der vorliegenden Erfindung vorgesehen, durch die Kombination einer Adaptervorrichtung für ein Kernelement mit wenigstens einem Referenzabschnitt in einer Positionierhilfe durch exakte Positionierung der Positionierhilfe auch das Kernelement selbst so exakt in der Schalung zu positionieren, dass später keine oder nur sehr geringe Abweichungen zwischen der tatsächlichen Lage des Kernelements und seiner Solllage auftreten können. Durch diese Kombination ist somit bei einer exakt ausgerichteten Positionierhilfe automatisch auch das Kernelement zumindest mit seinem unteren Ende lagegenau und exakt in seiner vorgesehenen Befestigungsposition ausgerichtet. Unter einem Referenzabschnitt wird dabei ein solcher Abschnitt der Positionierhilfe verstanden, der in Bezug auf die Adaptervorrichtung eine vordefinierte Lage aufweist, so dass mittels des oder der Referenzabschnitte die tatsächliche Position des Kernelements festgestellt werden kann. Beispielsweise kann der Referenzabschnitt durch eine Aufnahme für einen Messkörper, insbesondere eine Messkugel oder ein Messprisma, gebildet sein. Der Referenzabschnitt kann jedoch auch durch eine Anlagekante, eine Anlagefläche oder eine sonstige Einrichtung gebildet sein, mittels der die Positionierhilfe an der Schalung positionierbar ist.

Besonders vorteilhaft ist es, wenn zur Positionierung der Kernelemente ein Messbezugssystem eingerichtet wird, die wenigstens eine erste Positionierhilfe mittels des Referenzabschnitts lagegenau anhand von für den Referenzabschnitt vorgegebenen Sollkoordinaten in dem Messbezugssystem eingemessen und in der Schalung fixiert wird und das jeweils zu positionierende Kernelement durch Anordnung an der Adaptervorrichtung der Positionierhilfe zumindest mit seinem unteren Ende lagegenau in einer vorgesehenen Befestigungsposition positioniert wird.

Weiterhin ist nach der vorliegenden Erfindung ein Betonfundament vorgesehen, welches in für eine Befestigung des Windkraftturms vorgesehenen Befestigungspositionen in das Betonfundament eingegossene Hüllrohre für Spannglieder aufweist, wobei die Hüllrohre als einteilige Hüllrohre mit konstantem Querschnitt ausgeführt sind. Da die Hüllrohre nach der vorliegenden Erfindung mit einer sehr hohen Genauigkeit in ihrer Solllage positioniert werden, kann im Gegensatz zu bekannten Hüllrohren des Stands der Technik auf eine trichterförmige Aufweitung der Hüllrohre an ihrem einen Ende verzichtet werden und statt dessen einteilige Hüllrohre mit konstantem Querschnitt verwendet werden. Diese können im Gegensatz zu Hüllrohren mit Aufweitungen einteilig entweder aus einem Kunststoffmaterial oder aus einem Stahlmaterial hergestellt werden, wobei kostengünstige Halbzeuge verwendet werden können. Die Hüllrohre müssen dabei nur auf ihre vorgesehene Länge hin abgelängt werden. Sowohl die Herstellung als auch die Montage der Hüllrohre in der Schalung ist hierdurch erheblich vereinfacht. Ebenso können keine Fehler an Verbindungsstellen, wie bei mehrteiligen Hüllrohren, auftreten. Das erfindungsgemäße Verfahren kann aber natürlich auch eingesetzt werden, um herkömmliche Hüllrohre mit trichterförmigen Aufweitungen zu positionieren und einzugießen.

Bei einem Windkraftturm, insbesondere einem Windkraftturm aus Betonfertigteilen, der mittels Spanngliedern vorzugsweise extern vorgespannt ist, und der ein nach dem erfindungsgemäßen Verfahren hergestelltes Betonfundament aufweist, kann somit eine besonders gute Führung und Verankerung der Spannglieder erreicht werden. Der Übergang zwischen den frei laufenden Abschnitten der Spannglieder und den in den Hüllrohren verlaufenden Abschnitten kann besonders glatt hergestellt werden, so dass keine Beschädigungen der Spannglieder mehr zu befürchten sind.

Zur Durchführung des erfindungsgemäßen Verfahrens sowie zur Herstellung eines erfindungsgemäßen Betonfundaments wird weiterhin eine Positioniervorrichtung zur Ausrichtung von Kernelementen in einer Schalung vorgeschlagen, die wenigstens eine erste Positionierhilfe mit einer Adaptervorrichtung für ein Kernelement und wenigstens einen Referenzabschnitt zum Einmessen der ersten Positionierhilfe umfasst.

Nach einer vorteilhaften Ausführung der Erfindung weist die erste Positionierhilfe der Positioniervorrichtung einen Volumenkörper auf, welcher unterseitig eine plane Einrichtungsfläche aufweist und/oder in welchem oberseitig die Adaptervorrichtung und/oder der wenigstens eine Referenzabschnitt, insbesondere eine Aufnahme für einen Messkörper, eingearbeitet sind. Durch die einteilige Fertigung der Positionierhilfe als Volumenkörper können an diesem die Adaptervorrichtung für das Kernelement sowie der Referenzabschnitt sehr genau zueinander platziert werden, so dass Montagetoleranzen, wie bei einer separaten Fertigung der beiden Teile, entfallen. Vorteilhafterweise wird als Referenzabschnitt eine Aufnahme für einen Messreflektor, insbesondere für eine Messkugel oder für ein Messprisma, verwendet, wobei der Messreflektor beim Einmessen der ersten Positionierhilfe in die Aufnahme eingesetzt wird.

Vorzugsweise wird der Volumenkörper CNC-gefertigt, insbesondere CNCgefräst, wodurch eine hochgenaue Fertigung möglich ist. Mögliche Abweichungen zwischen der Position der Adaptervorrichtung und des Referenzabschnitts liegen dabei aufgrund der CNC-Fertigung im Bereich von unter einem Zehntelmillimeter. Ebenso weist die unterseitige Einrichtungsfläche eine große Ebenheit auf und kann daher ohne weitere Maßnahmen der Höhenpositionierung der Positionierhilfe dienen.

Nach einer vorteilhaften Weiterbildung des erfindungsgemäßen Verfahrens ist vorgesehen, dass ein Bereich um die Durchgangsöffnungen jeweils als Widerlager für die Spannglieder ausgebildet wird. In diesem Bereich können beispielsweise Ankerplatten abgestützt werden.

Gemäß einer vorteilhaften Weiterbildung des erfindungsgemäßen Verfahrens ist vorgesehen, dass als Kernelemente Hüllrohre, welche nach dem Gießen des Betonfundaments im Betonfundament verbleiben, verwendet werden.

Nach einer anderen vorteilhaften Weiterbildung werden als Kernelemente Schalungskerne verwendet, welche nach dem Gießen des Betonfundaments aus dem Betonfundament entfernt werden.

Nach einer vorteilhaften Weiterbildung des erfindungsgemäßen Verfahrens ist vorgesehen, dass die erste Positionierhilfe mehrere Referenzabschnitte aufweist, wobei beim Einmessen der ersten Positionierhilfe mehrere der Referenzabschnitte verwendet werden. Die erste Positionierhilfe kann hierdurch bezogen auf mehrere Richtungen lagegenau eingerichtet werden.

Gemäß einer vorteilhaften Weiterbildung des erfindungsgemäßen Verfahrens ist vorgesehen, dass für jedes Kernelement eine erste Positionierhilfe bereitgestellt wird. Die einzelnen Kernelemente können somit unabhängig voneinander eingerichtet werden.

Bei dem Verfahren zur Herstellung eines Betonfundaments wird bevorzugt eine Schalung, zumindest teilweise, errichtet, indem zumindest ein ebener Schalboden für eine spätere Unterseite des Fundaments errichtet wird. Ein Schalboden ist dabei ein Teil der Schalung, der liegend angeordnet ist. Dieser Schalboden wird vorzugsweise parallel zu einer Bezugsebene des Messsystems ausgerichtet und auf seine vorgegebene Sollhöhe eingerichtet. Anschließend wird auf dem in seiner Sollhöhe eingerichteten Schalboden die wenigstens eine Positionierhilfe bereitgestellt, wodurch eine Unterkante des jeweils zu positionierenden Kernelements in ihrer Sollhöhe positioniert wird. Es ist somit für die korrekte Höhenpositionierung der Positioniervorrichtung ausreichend, diese mittels ihrer Einrichtungsfläche auf den in seiner Sollhöhe eingerichteten Schalboden aufzulegen.

Besonders vorteilhaft ist es dabei, wenn in jeder Befestigungsposition eine Positioniervorrichtung bereitgestellt wird, die dann auch entsprechend exakt positioniert wird. Ebenso ist es jedoch auch möglich, lediglich einen Teil der Kernelemente auf diese Art auszurichten, oder Kernelemente für Spannglieder mit anderen Befestigungselementen zu kombinieren.

Anschließend wird die in ihrer Sollhöhe positionierte Positionierhilfe mittels wenigstens zweier Referenzabschnitte in ihrer Radial- und Winkelsolllage positioniert und dann fixiert, wobei danach das jeweils zu positionierende Kernelement an der Adaptervorrichtung festgelegt, insbesondere eingesetzt oder aufgesteckt, wird. Je nach Ausführung der Positionierhilfe und je nach Vorgaben für die Lage und Ausrichtung der Kernelemente kann es dabei bereits ausreichend sein, zwei Referenzabschnitte an der Positionierhilfe vorzusehen und die Positionierhilfe mittels der beiden Referenzabschnitte einzumessen und zu positionieren.

Vorzugsweise werden dann für die Referenzabschnitte Sollkoordinaten vorgegeben und die Positionierhilfe wird lagegenau entsprechend der mehreren vorgegebenen Sollkoordinaten eingemessen und in der Schalung fixiert. Sind wenigstens drei Referenzabschnitte an der Positionierhilfe vorgesehen, dann kann die Positionierhilfe sowohl bezüglich ihrer Radial- und Winkelsolllage als auch bezüglich der Neigung ihrer Oberfläche korrekt in ihrer Sollposition eingestellt werden.

Zur Fixierung der Positionierhilfe an dem Schalboden ist es vorteilhaft, wenn die erste Positionierhilfe eine Befestigungsvorrichtung, vorzugsweise wenigstens zwei Befestigungsbohrungen, zur Fixierung der Positionierhilfe in der Schalung aufweist.

Um anschließend die Kernelementlängsachse entsprechend ihrer vorgegebenen Solllage exakt ausrichten zu können, ist es vorteilhaft, wenn die Positioniervorrichtung eine zweite Positionierhilfe mit einer zweiten Adaptervorrichtung für das Kernelement und mit wenigstens einem Referenzabschnitt aufweist. Die zweite Positionierhilfe wird dann an dem oberen Ende des jeweils zu positionierenden Kernelements festgelegt, insbesondere aufgesetzt oder in dieses eingesetzt, und mittels des Referenzabschnitts wird das obere Ende des Kernelements und/oder eine Kernelementlängsachse entsprechend der vorgegebenen Achsrichtung ausgerichtet. Die Kernelementlängsachse wird dabei exakt an dem späteren Sollverlauf der Spanngliedlängsachse ausgerichtet. Vorteilhafterweise weist die zweite Positionierhilfe als Referenzabschnitt eine Aufnahme für einen Messreflektor, insbesondere für eine Messkugel oder für ein Messprisma, auf, wobei der Messreflektor beim Einmessen des oberen Endes bzw. der Längsachse des jeweils zu positionierenden Kernelements in die Aufnahme eingesetzt wird.

Gemäß einer vorteilhaften Weiterbildung des erfindungsgemäßen Verfahrens ist vorgesehen, dass die erste Positionierhilfe und/oder die zweite Positionierhilfe mehrere Referenzabschnitte aufweisen und beim Einmessen der Positionierhilfe und damit auch des Kernelements mehrere der Referenzabschnitte verwendet werden. Sind als Referenzabschnitte Aufnahmen für einen Messkörper vorgesehen, so wird der Messreflektor nacheinander in mehrere der Aufnahmen eingesetzt. Zumindest die erste Positionierhilfe weist vorzugsweise drei oder vier Referenzabschnitte auf.

Die Kernelementlängsachse wird vorzugsweise um einen spitzen Winkel gegenüber der Lotrechten in Richtung des Fundamentmittelpunkts verschwenkt ausgerichtet. Der spitze Winkel beträgt dabei bis zu 15°, vorzugsweise etwa um die 5°. Bei einer Positionierhilfe ist dabei die zumindest erste Adaptervorrichtung für das Kernelement in einem spitzen Winkel gegenüber einer Senkrechten auf die unterseitige Einrichtungsfläche der ersten Positionierhilfe orientiert. Die Orientierung der Adaptervorrichtung gegenüber der unterseitigen Einrichtungsfläche entspricht somit bereits dem Sollverlauf der Kernelementlängsachse, sobald die Positioniervorrichtung in der Befestigungsposition positioniert ist. Die Arbeiten zur Einmessung und Positionierung der Kernelementlängsachse können daher weiter minimiert werden.

Die Lage der Positionierhilfen und/oder die Lage der Kernelemente wird dabei jeweils mit einer Genauigkeit von +/- 2 mm, vorzugsweise von +/- 1 mm eingemessen und positioniert. Die Kernelemente sind somit durch einfaches Einsetzen in ihre Adaptervorrichtung bereits in ihrer korrekten Lage bezüglich des unteren Endes positioniert und müssen lediglich bezüglich ihrer Achsrichtung geringfügig nachkorrigiert werden.

Bei einer Positioniervorrichtung ist es vorteilhaft, wenn die erste und/oder die zweite Adaptervorrichtung für das Kernelement jeweils durch einen aus der Oberfläche der jeweiligen Positionierhilfe herausragenden Vorsprung ausgebildet ist, auf welchen das Kernelement festlegbar, insbesondere aufsteckbar, oder welcher in das Hüllrohr einsteckbar ist. Es ist jedoch auch denkbar, die Adaptervorrichtung als Ausnehmung in der jeweiligen Positionierhilfe auszubilden, in welche das Kernelement dann jeweils zu seiner Positionierung einsteckbar ist.

Weiterhin ist es vorteilhaft, wenn zumindest die zweite Positionierhilfe aus einem Kunststoffmaterial hergestellt ist. Die zweite Positionierhilfe kann hierdurch sehr kostengünstig hergestellt werden. Die erste Positionierhilfe ist hingegen vorzugsweise aus einem Stahlmaterial hergestellt, um eine präzise Bearbeitung der Aufnahmen sowie der Adaptervorrichtung zu ermöglichen.

Bei einem Verfahren zur Herstellung eines Betonfundaments ist es daneben vorteilhaft, wenn vor dem Ausrichten der Hüllrohrlängsachsen eine Bewehrung in der Schalung festgelegt wird und das oder die in ihrer vorgegebenen Achsrichtung ausgerichteten Kernelemente an der Bewehrung fixiert werden. Hierzu können beispielweise Fixierstücke zum Einsatz kommen, welche mit der Bewehrung verschweißt, verklemmt oder verschraubt werden. Denkbar ist es aber auch, die Kernelemente direkt mit der Bewehrung zu verbinden, beispielsweise zu verschrauben, verschweißen oder zu verklemmen. Beim anschließenden Betoniervorgang sind somit keine Veränderungen der Lage mehr zu befürchten.

Weiterhin ist es vorteilhaft, wenn vor dem Festlegen der Bewehrung zumindest eine Schalwand auf dem ersten Schalboden errichtet wird. Eine Schalwand ist dabei ein Teil einer Schalung, der aufrecht angeordnet ist. Auf diese Weise kann die Bewehrung in seitlicher Richtung fixiert werden, so dass auch die daran fixierten Kernelemente beim Betonieren sicher in ihrer Position gehalten werden.

Sind die Hüllrohre in Bezug auf ihre Lage und ihre Hüllrohrlängsachse vollständig in der Schalung positioniert und dort fixiert, so ist es vorteilhaft, wenn jeweils eine Höhenlage einer Oberkante der Kernelemente messtechnisch erfasst wird. Hierdurch kann noch einmal eine Kontrolle der exakten Ausrichtung der Kernelemente erfolgen.

Weiterhin ist es vorteilhaft, wenn beim Betonieren des Fundaments aus den Höhenlagen der Oberkanten der Kernelemente eine maximale Füllhöhe der Schalung bestimmt wird. Vorzugsweise wird dabei die Füllhöhe derart bestimmt, dass bei dem fertiggestellten Fundament die Kernelemente die Oberfläche des Fundaments um einen bestimmten Abstand überragen.

Nach vollständiger Ausrichtung der Kernelemente in Bezug auf ihre Lage und ihre Kernelementlängsachse wird die Schalung schließlich vervollständigt und das Fundament gegossen. Dabei ist es vorteilhaft, wenn beim Gießen des Fundaments zumindest die erste Positionierhilfe einen Teil der Schalung bildet. Die Positionierhilfe verbleibt somit im Verbund mit dem Kernelement, so dass Lageänderungen des Kernelements während der Betonage weiterhin vermieden werden können.

Weitere Vorteile der Erfindung werden anhand der nachfolgend dargestellten Ausführungsbeispiele beschrieben. Es zeigen:
- **Figur 1**: ein erfindungsgemäßes Betonfundament für einen Windkraftturm in einer schematischen, geschnittenen Übersichtsdarstellung,
- **Figur 2**: eine erste Positionierhilfe einer erfindungsgemäßen Positioniervorrichtung in einer Draufsicht,
- **Figur 3**: die Positionierhilfe der Figur 2 in einer geschnittenen Seitenansicht,
- **Figur 4**: eine schematische Schnittdarstellung einer zweiten Positionierhilfe einer erfindungsgemäßen Positioniervorrichtung,
- **Figuren 5a und 5b**: eine Darstellung eines erfindungsgemäßen Verfahrens zur Herstellung eines Fundaments in einem ersten Schritt,
- **Figuren 6a und 6b**: weitere Schritte des erfindungsgemäßen Verfahrens zur Herstellung eines Betonfundaments,
- **Figur 7**: eine schematische Schnittdarstellung eines vollständig in einer Schalung positionierten und ausgerichteten Kernelements, sowie
- **Figur 8**: eine alternative Ausführung einer Positionierhilfe.

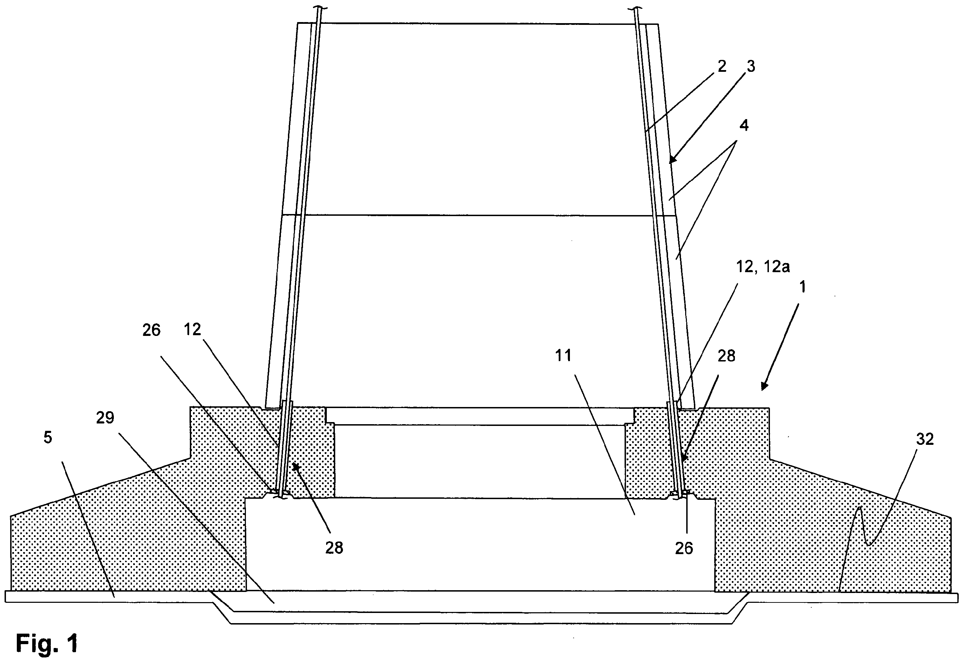

Figur 1 zeigt ein erfindungsgemäßes Betonfundament 1 für einen Windkraftturm 3 in einer schematischen Schnittdarstellung. Der Windkraftturm 3 besteht nach der vorliegenden Darstellung aus einer Vielzahl ringförmiger oder ringsegmentförmiger Betonfertigteile 4, die auf dem Fundament 1 übereinander angeordnet sind und miteinander sowie mit dem Fundament 1 mittels Spanngliedern 2 befestigt sind. Nach der vorliegenden Darstellung verlaufen dabei die Spannglieder 2 extern, d. h. außerhalb des Betonquerschnitts der Betonfertigteile 4. Die Erfindung ist jedoch auch für Windkrafttürme 3, deren Spannglieder 2 in Spannkanälen innerhalb des Betonquerschnitts verlaufen, geeignet. Als Spannglieder 2 kommen sämtliche bekannten Spannglieder, insbesondere Spanndrähte, Spannstähle, Spannseile, oder Spannlitzen in Frage.

Die Spannglieder 2 erstrecken sich bei dem fertiggestellten Windkraftturm 3 vom Fundament 1 bis zu einem hier nicht dargestellten Kopfabschnitt des Windkraftturms 3 und können mittels einer ebenfalls nicht dargestellten Spannvorrichtung vorgespannt werden. Um die Spannkräfte der Spannglieder 2 sicher in das Betonfundament einzuleiten, werden die Spannglieder 2 durch Durchgangsöffnungen, die sich zwischen einer Oberseite und einer Unterseite des Fundaments 1 erstrecken, hindurchgeführt und an der Unterseite des Betonfundaments 1 festgelegt. Das Betonfundament 1 weist hierzu unterseitig eine Ausnehmung 11 auf, die ein Widerlager für die dort festgelegten Spannglieder 2 bildet.

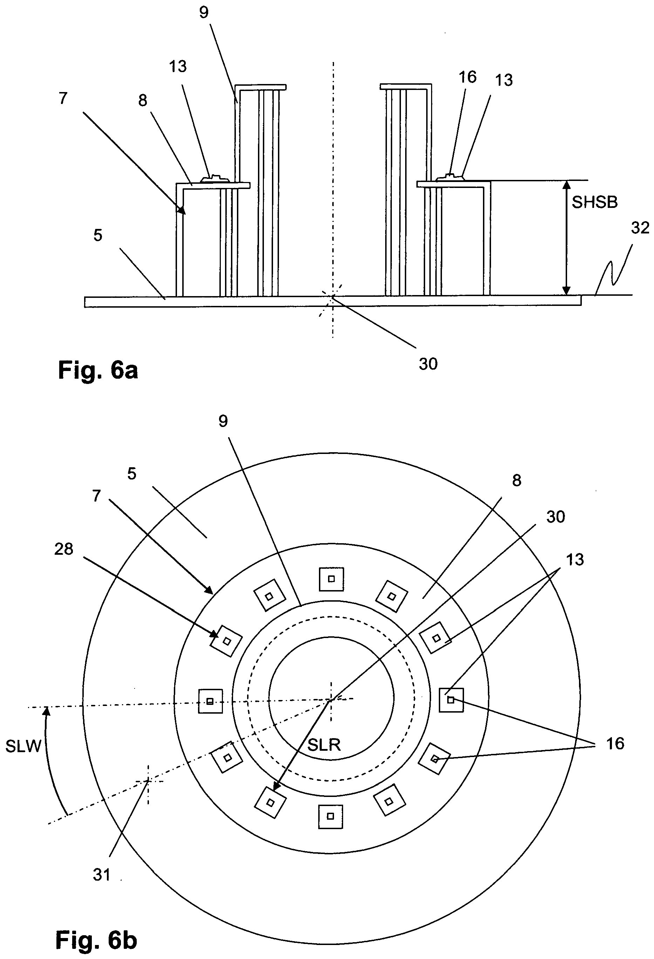

Zur Befestigung des Windkraftturms 3 an dem Fundament 1 sind dabei eine Vielzahl von Befestigungspositionen 28, vorzugsweise gleichmäßig über den Umfang des Betonfundaments 1 verteilt, vorgesehen (siehe auch Figur 6b). Nach dem vorliegenden Ausführungsbeispiel wird nun in jeder der vorgesehenen Befestigungspositionen 28 jeweils ein Kernelement 12 in das Betonfundament 1 eingegossen. Die Kernelemente 12 werden dabei in den für die Befestigung des Windkraftturms 3 vorgesehenen Befestigungspositionen 28 in der Schalung ausgerichtet und positioniert und hierdurch in den vorgesehenen Befestigungspositionen 28 eingegossen.

Die Kernelemente 12 sind in den gezeigten Ausführungsbeispielen hohle Hüllrohre 12a, welche nach dem Gießen des Betonfundaments 1 im Betonfundament 1 verbleiben. Alternativ könnten als Kernelemente 12 Schalungskerne, welche nach dem Gießen des Betonfundaments 1 aus dem Betonfundament 1 entfernt werden, verwendet werden.

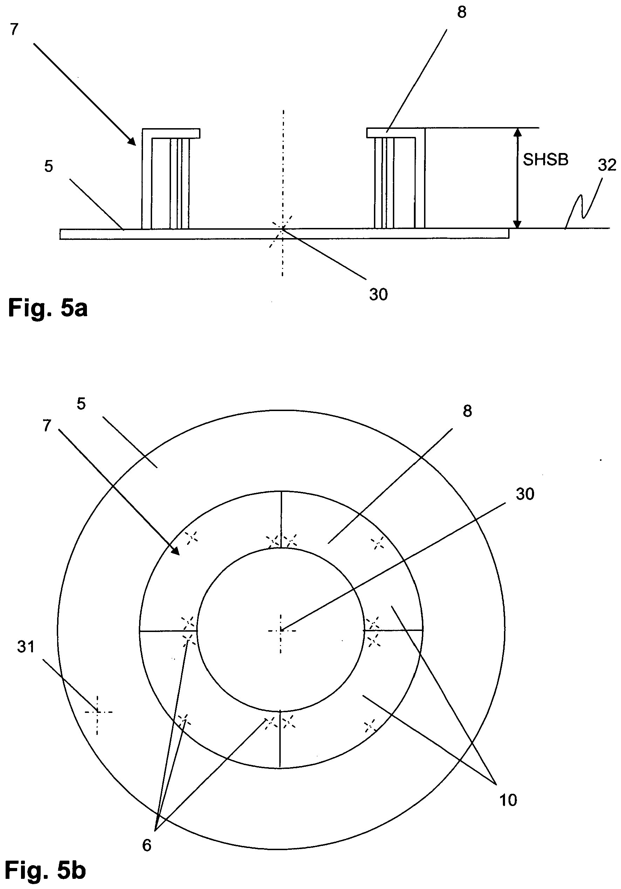

Im Ausführungsbeispiel ist nun vorgesehen, die Kernelemente 12 mit einer derart hohen Genauigkeit in der Schalung 7 (siehe Figuren 5 und 6) zu positionieren und mit einer derart hohen Genauigkeit in das Fundament 1 einzugießen, dass auf trichterförmig aufgeweitete Hüllrohre 12a bzw. trichterförmig aufgeweitete Durchgangsöffnungen verzichtet werden kann. Im Ausführungsbeispiel des Betonfundaments 1 sind daher Hüllrohre 12a als einteilige Hüllrohre 12a mit konstantem Innenquerschnitt eingegossen. Ein derart exaktes Eingießen von Kernelementen 12 bzw. Hüllrohren 12a wird durch eine hochgenaue Positioniervorrichtung ermöglicht. Die Kernelemente 12 sind dabei mit einer Genauigkeit von +/- 1 mm in der Schalung positioniert und anschließend mit einer entsprechend hohen Genauigkeit von +/- 1 mm in dem Betonfundament 1 eingegossen.

Die Figuren 5a, 5b sowie 6a, 6b zeigen verschiedene Schritte der Herstellung des Fundaments 1, jeweils in einer schematischen Schnittdarstellung (Figuren 5a, 6a) und in einer schematischen Draufsicht (Figuren 5b, 6b). Zur Herstellung des Fundaments wird zunächst eine Sauberkeitsschicht 5 im Bereich der geplanten Anlage auf dem Boden hergestellt. Gegebenenfalls kann weiterhin noch eine Bodenplatte 29 für das Fundament 1 hergestellt werden. Nach Herstellen der Sauberkeitsschicht 5 wird ein Messbezugssystem errichtet (siehe Figur 5b), welches als Messbezugspunkte beispielsweise einen Mittelpunkt 30 der geplanten Anlage sowie einen weiteren, radial entfernt vom Mittelpunkt 30 gelegenen Referenzpunkt 31 beinhaltet. Der Referenzpunkt 31 kann beispielsweise die Richtung einer Türachse der späteren Windkraftanlage markieren. Anhand der beiden Referenzpunkte 30 und 31 wird nun das Messbezugssystem mit seinen Vermessungsachsen aufgebaut. Eine Höhenbezugsebene 32 des Messbezugssystems wird dabei beispielsweise durch die Oberkante der Sauberkeitsschicht 5 gebildet.

Nach Erstellen der Sauberkeitsschicht 5 und Einrichtung des Messbezugssystems wird nun, wie in Figur 5a dargestellt, zunächst ein Schalboden 8, welcher im gezeigten Beispiel die spätere Ausnehmung 11 bildet, auf der Oberkante der Sauberkeitsschicht 5 errichtet. Der Schalboden 8 kann dabei in üblicher Weise hergestellt und auf der Sauberkeitsschicht 5 abgestützt werden.

Nach dem vorliegend in den Figuren 5 und 6 dargestellten Verfahren erfolgt nun die Höhenpositionierung der Kernelemente 12 nicht direkt, sondern indirekt durch die Anordnung einer Positionierhilfe 13, die mittels einer Adaptervorrichtung 16 jeweils die Position der Kernelemente 12, vorliegend Hüllrohre 12a, bestimmt. Da später die Positionierhilfen 13 lediglich durch Auflegen auf den Schalboden 8 exakt in ihrer Sollhöhe SHSB positioniert werden sollen, ist somit auch eine genaue Höheneinrichtung des Schalbodens 8 erforderlich. Der Schalboden 8 wird daher mittels mehrerer Messpunkte 6 exakt auf seine vorgegebene Sollhöhe SH nivelliert. Nach der vorliegenden Darstellung (Figur 5b) besteht der Schalboden 8 aus mehreren Segmenten 10, die jeweils einzeln mittels mehrerer Messpunkte 6 höhenmäßig eingerichtet werden. Vorliegend sind dabei lediglich vier Segmente mit jeweils lediglich drei Messpunkten dargestellt; je nach Anlagengröße können jedoch auch wesentlich mehr Segmente 10 vorgesehen sein. Ebenso können je nach Größe der Segmente 10 auch mehrere Messpunkte 6 vorgesehen sein. Da der Schalboden 8 die Höhenposition der Positionierhilfen 13 bestimmt, weist der Schalboden 8 eine große Ebenheit auf.

Wie der Figur 5a entnehmbar, ist dabei der Schalboden 8 parallel zu der Bezugsebene 32 des Messsystems orientiert. Die Anordnung der ersten Positionierhilfe 13 auf dem Schalboden 8 ist hierdurch erleichtert. Grundsätzlich ist es jedoch auch möglich, den Schalboden 8 mit einer Neigung zu versehen.

Die Figuren 6a und 6b zeigen die Bereitstellung einer Positioniervorrichtung mit wenigstens einer ersten Positionierhilfe 13 zur Ausrichtung der Hüllrohre 12a. Dabei wird auf dem höhenmäßig eingerichteten Schalboden 8 in für eine spätere Befestigung des Windkraftturms 3 vorgesehenen Befestigungspositionen 28 eine Positioniervorrichtung mit wenigstens einer ersten Positionierhilfe 13 bereitgestellt. Vorliegend wird dabei in jeder Befestigungsposition 28 eine Positionierhilfe 13 bzw. eine Positioniervorrichtung vorgesehen. Abweichend von der gezeigten Darstellung ist jedoch auch eine Kombination von Spanngliedern 2 mit andern Befestigungsarten, wie Ankern mit Ankerhülsen, denkbar. Jede Positionierhilfe 13 weist jeweils eine Adaptervorrichtung 16 für ein Kernelement 12 auf, so dass bei korrekt ausgerichteter Positionierhilfe 13 durch Verbinden des Kernelements, im gezeigten Beispiel eines Hüllrohrs 12a, mit der Adaptervorrichtung 16 zumindest eine Unterkante 22 des jeweils zu positionierenden Kernelements 12 bereits exakt in ihrer Sollhöhe SHUK positioniert ist.

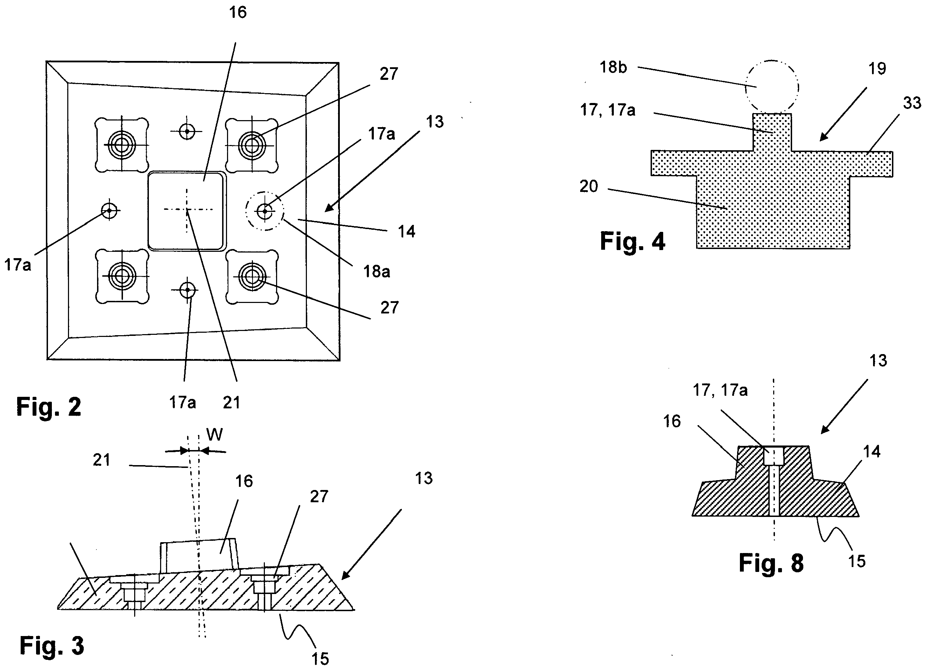

Figur 2 zeigt eine erste Positionierhilfe 13 einer erfindungsgemäßen Positioniervorrichtung in einer Draufsicht und Figur 3 zeigt die Positionierhilfe 13 der Figur 2 in einer Schnittdarstellung. Die Positionierhilfe 13 weist dabei die Adaptervorrichtung 16 auf, die vorliegend durch einen aus der Oberfläche der Positionierhilfe herausragenden Vorsprung ausgebildet ist (Figur 3). Die Querschnittsabmessungen des Vorsprungs bzw. der Adaptervorrichtung 16 entsprechen dabei im Wesentlichen denen des vorgesehen Kernelements 12, so dass dieses durch einfaches Aufstecken auf die Adaptervorrichtung 16 mit dieser verbindbar ist. Vorliegend ist eine Adaptervorrichtung 16 für ein rechteckiges bzw. quadratisches Hüllrohr 12a gezeigt. Ebenso kommen jedoch auch runde Hüllrohre 12a bzw. Kernelemente 12 mit entsprechend runden Adaptervorrichtungen 16 in Frage.

Neben der Adaptervorrichtung 16 weist die erste Positionierhilfe 13 noch zumindest einen Referenzabschnitt 17, vorliegend eine Aufnahme 17a für einen Messreflektor 18, auf. Die vorliegende Positionierhilfe 13 weist vier Aufnahmen 17a für Messreflektoren 18 auf, wodurch eine besonders exakte Ausrichtung der Positionierhilfe 13 in ihrer Solllage erfolgen kann. Die Aufnahmen 17a für die Messreflektoren 18 können dabei im einfachsten Fall durch Bohrungen gebildet werden. Die erste Positionierhilfe 13 weist weiterhin noch Befestigungsbohrungen 27, vorliegend vier Befestigungsbohrungen 27, auf, mittels welcher die exakt ausgerichtete Positionierhilfe 13 in ihrer Solllage fixiert werden kann. Die Positionierhilfe 13 beinhaltet vorteilhafterweise einen Volumenkörper 14, in welchem einteilig die Adaptervorrichtung 16 sowie der wenigstens eine Referenzabschnitt 17 eingearbeitet sind. Unterseitig weist der Volumenkörper 14 eine plane Einrichtungsfläche 15 auf, so dass nach exakter höhenmäßiger Einrichtung des ersten Schalbodens 8 auf seine Sollhöhe SHSB die Positionierhilfe 13 lediglich auf den Schalboden 8 aufgelegt werden muss und dadurch bereits automatisch in ihrer korrekten Sollhöhe, die der Sollhöhe SHSB des Schalbodens 8 entspricht, positioniert ist.

Figur 8 zeigt eine Abwandlung einer ersten Positionierhilfe 13. Diese weist ebenso, wie in Figur 2 gezeigt, eine Adaptervorrichtung 16 für ein Kernelement 12 auf, beinhaltet jedoch lediglich eine einzige Aufnahme 17a für einen Messreflektor 18 als Referenzabschnitt 17. Zumindest bei Verwendung von Kernelementen 12 mit rundem Querschnitt ist dabei durch die einzige mittig befindliche Aufnahme 17a bereits eine korrekte Ausrichtung der Positionierhilfe 13 und somit des unteren Endes des Kernelements 12 möglich. Die Orientierung der Adaptervorrichtung 20 liegt vorliegend senkrecht zu der unteren Einrichtungsfläche 15. Die Unterkante 22 des Kernelements 12 ist dennoch nach dem Aufsetzen des Kernelements 12 auf die Adaptervorrichtung 16 bzgl. ihrer Sollhöhe SHUK positioniert. Das Einrichten der Kernelementlängsachse 21 kann durch Verschwenken des Kernelements 12 auf der Adaptervorrichtung 20 erfolgen.

Figur 6b zeigt nun die teilweise errichtete Schalung 7, bei welcher neben dem ersten Schalboden 8 bereits eine Schalwand 9 montiert wurde. In jeder der vorgesehenen Befestigungspositionen 28 wurde, wie in Figur 6b ersichtlich, eine erste Positionierhilfe 13 aufgelegt und bereits in Radial- und Winkelsolllage SLR und SLW positioniert.

Zur Positionierung der Volumenkörper 14 der ersten Positionierhilfe 13 wird nun ein Messreflektor 18, hier eine Messkugel 18a, die durch eine strichzwei-punktierte Linie symbolisiert ist, in die erste Aufnahme 17a eingelegt, der Volumenkörper 14 anhand der Sollkoordinaten für die erste Aufnahme 17a eingerichtet und bezüglich seiner Lage fixiert. Die Sollkoordinaten beziehen sich dabei vorteilhafterweise jeweils auf den Mittelpunkt einer sich in der Aufnahme 17a befindenden Messkugel 18a. Anschließend wird die Messkugel 18a in die zweite Aufnahme 17a eingelegt und die Positionierhilfe 13 anhand der für die zweite Aufnahme 17a vorgegebenen Sollkoordinaten auf ihre Solllage eingerichtet und fixiert.

Nach dem Beispiel der Figur 2 sind insgesamt vier Aufnahmen 17a für eine Messkugel 18a vorgesehen, in welche nacheinander eine Messkugel 18a eingelegt und eingemessen wird. Es ist somit für jede der vier Aufnahmen 17a ein Satz von Sollkoordinaten vorgegeben. Da sich die Volumenkörper 14 bereits in ihrer Sollhöhe SHSB befinden, beinhaltet jeder Satz lediglich zwei Sollkoordinaten, welche die radiale Lage und Winkellage des jeweiligen Messkörpers 18 bestimmen.

Bei korrekter Einrichtung über die erste und zweite Aufnahme 17a dienen die Messungen für die dritte und vierte Aufnahme 17a lediglich noch der Kontrolle. Nachdem die Positionierhilfe 13 vollständig auch in Bezug auf ihre Winkelsolllage SLW und ihre Radialsolllage SLR eingemessen und eingerichtet ist, wird sie schließlich mittels einer Befestigungsvorrichtung auf dem ersten Schalboden 8 fixiert. Nach der in der Figur 2 gezeigten Ausführung einer Positionierhilfe 13 sind hierfür die Befestigungsbohrungen 27 vorgesehen. Andere Fixiereinrichtungen, wie beispielsweise Fixierstücke, die lediglich jeweils die Außenränder der Positionierhilfe 13 abstützen, sind jedoch ebenfalls möglich.

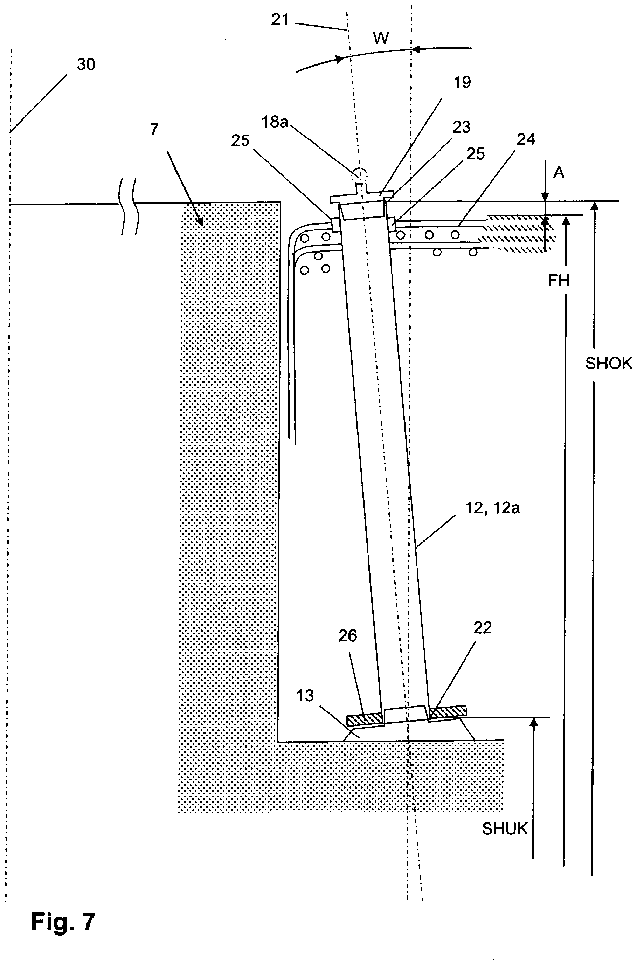

Nach vollständiger Einrichtung der Positionierhilfen 13 wird schließlich die Schalwand 9 montiert, wie in Figur 6a gezeigt. Schließlich kann das jeweils zu positionierende Kernelement 12 mit seinem unteren Ende an der Adaptervorrichtung 16 angeordnet werden, beispielsweise eingesetzt werden bzw. auf diese aufgesetzt werden, so dass das untere Ende des Kernelements 12 bereits in seiner Solllage bezüglich Winkel und Radius SLR und SLW positioniert ist und weiterhin auch die Unterkante 22 automatisch in ihrer Sollhöhe SHUK positioniert ist (siehe auch Figur 7).

Um nun auch die Kernelementlängsachse 21 in ihrer Solllage bezüglich ihres Winkels W gegenüber der Senkrechten ausrichten zu können, umfasst die Positioniervorrichtung eine zweite Positionierhilfe 19. Die Ausrichtung der Kernelementlängsachse 21 ist schematisch in Figur 7 in einer Schnittdarstellung gezeigt und wird später weiter erläutert.

Die zweite Positionierhilfe 19 ist in einer schematischen Schnittdarstellung in Figur 4 gezeigt. Die zweite Positionierhilfe 19 weist ebenfalls eine Adaptervorrichtung 20 für ein Kernelement 12 auf, die vorliegend ebenfalls als Vorsprung der Positionierhilfe 19 ausgebildet ist und hierdurch im vorliegenden Beispiel auf das Hüllrohr 12a aufgesetzt werden kann bzw. mittels der Adaptervorrichtung 20 in das Hüllrohr 12a eingesetzt werden kann. Auch der Querschnitt der Adaptervorrichtung 20 entspricht im Wesentlichen dem Querschnitt des Hüllrohrs 12a. Ein Anschlag 33 liegt nach dem Aufsetzen der zweiten Positionierhilfe 19 an der Oberkante 23 des Hüllrohrs 12a an. Weiterhin weist die zweite Positionierhilfe 19 ebenfalls einen Referenzabschnitt 17, hier eine Aufnahme 17a, für einen Messreflektor 18, auf. Als Messreflektor 18 kann beispielsweise ein Messprisma 18b zum Einsatz kommen, welches auf die Aufnahme 17a der zweiten Positionierhilfe 19 aufsetzbar ist. Abwandlungen bezüglich der Form der zweiten Positionierhilfe 19 sind möglich. So könnte die Positionierhilfe 19 auch eine Ausnehmung als Adaptervorrichtung 20 aufweisen, so dass die Positionierhilfe 19 mit ihrer Ausnehmung über das Kernelement 12 steckbar wäre.

Figur 7 zeigt das Einrichten der Kernelementlängsachse 21 in einer schematischen Schnittdarstellung. Nach dem Aufstecken der Kernelemente 12 auf die Positionierhilfen 13 wird eine Bewehrung 24, die hier aus Gründen der Übersichtlichkeit nur teilweise dargestellt ist, in der Schalung 7 montiert. Vorteilhaft ist es, wenn, wie vorliegend gezeigt, bereits vor dem Aufstecken des Kernelements 12 eine Ankerplatte 26 mit dem Kernelement 12 verbunden wird, beispielsweise verschweißt wird. Diese wird hierdurch später an der korrekten Stelle in das Fundament 1 miteingegossen, so dass eine gute Krafteinleitung in das Fundament 1 erfolgen kann. Als Hüllrohre 12a ausgeführte Kernelemente 12 mit den daran befestigten Ankerplatten 26 sind im eingegossenen Zustand in Figur 1 gezeigt.

Die Kernelementlängsachse 21 wird nun mittels des Messreflektors 18 anhand der für diesen Messreflektor 18 vorgegebenen Sollkoordinaten auf ihren Winkel W gegenüber der Senkrechten eingerichtet, wobei aufgrund der Winkellage der Kernelementlängsachse 21 neben der radialen Solllage SLR und der Winkelsolllage SLW des Messreflektors 18 auch dessen Höhe zu berücksichtigen ist. Es ist daher für einen sich in der Aufnahme 17a der Positionierhilfen 19 befindlichen Messreflektor 18 jeweils ein Satz Sollkoordinaten, bestehend aus drei Koordinaten, vorgegeben. Die Einrichtung des Kernelements 12 erfolgt zunächst in einer ersten Richtung und das Kernelement wird bezüglich dieser ersten Richtung bereits an der Bewehrung 24 fixiert. Nach der vorliegenden Darstellung sind hierzu Fixierstücke 25 vorgesehen, die an die Außenkanten des sich in seiner Solllage befindlichen Kernelements 12 angelegt werden und mit der Bewehrung verbunden werden, beispielsweise verschraubt, verklemmt oder verschweißt werden. Das Kernelement 12 kann jedoch zur Fixierung auch direkt mit der Bewehrung verbunden werden, beispielsweise verschweißt, verschraubt oder verklemmt werden. Ist das Kernelement 12 aus Stahl, kann dieses in seiner Solllage auch direkt mit der Bewehrung 24 verschweißt werden. Im folgenden Schritt kann nun die Einstellung der Kernelementlängsachse 21 bezüglich ihrer zweiten, senkrecht zu der ersten Richtung liegenden Richtung erfolgen. Nach vollständiger Ausrichtung der Kernelementlängsachse 21 kann das Kernelement 12 wiederum mittels weiterer Fixierstücke 25 an der Bewehrung 24 fixiert werden. Auch in diesem Schritt kann die Fixierung des Kernelements 12 natürlich auch wie bereits oben beschrieben in anderer Weise erfolgen.

Der Winkel W der Kernelementlängsachse 21 gegenüber der Senkrechten beträgt dabei bis zu 15°, vorzugsweise in etwa 5°, wobei die Kernelementlängsachse 21 in Richtung des Fundamentmittelpunkts 30 bzw. der Fundamentmittelachse verschwenkt ist. Ist, wie vorliegend gezeigt, der Schalboden 8 eben und parallel zu der Höhenbezugsebene 32 eingerichtet, so ist es vorteilhaft, wenn die Orientierung der Adaptervorrichtung 16 bereits exakt der späteren Lage der Kernelementlängsachse 21 bezüglich ihres Winkels W entspricht (vgl. auch Figur 3). Nachdem nun die Kernelemente 12 vollständig positioniert und fixiert sind und die Bewehrung 24 eingebracht ist, wird, soweit noch nicht erfolgt, die Schalung 7 vervollständigt.

Für das folgende Betonieren des Betonfundaments 1 ist es vorteilhaft, wenn die Höhe der Oberkante der Kernelemente 12 SHOK messtechnisch erfasst wird und anschließend daraus eine maximale Füllhöhe FH der Schalung 7 bestimmt wird. Hierbei ist vorzugsweise ein Abstand A von mehreren Zentimetern zwischen der maximalen Füllhöhe FH und der Sollhöhe der Oberkante der Kernelemente 12 SHOK vorgesehen. Beim Betonieren des Fundaments 1 verbleibt dabei die Positionierhilfe 13 in der Schalung 7 und bildet hierdurch einen Teil der Schalung 7. Die zweite Positionierhilfe 19 kann hingegen nach erfolgter Positionierung und Fixierung des Kernelements 12 entnommen und an anderer Stelle weiterverwendet werden. Nach dem Betonieren und dem Abbauen der Schalung 7 kann die Positionierhilfe 13 dann entnommen werden, so dass die Ankerplatte 26 nun die Unterkante des Fundaments 1 in den Befestigungspositionen 28 bildet, wie in Figur 1 ersichtlich, und dort der Verankerung der Spannglieder 2 dienen kann.

Die Lage der Kernelemente 12 wird mittels des erfindungsgemäßen Verfahrens und mittels der erfindungsgemäßen Positionierhilfen mit einer Genauigkeit von +/- 1 mm gemessen und positioniert, so dass nun auch Kernelemente 12 ohne trichterförmige Aufweitungen an ihrem Ende verwendet werden können. Aufgrund der exakten Ausrichtung der Kernelemente 12 kommt es dabei zu keinen oder nur äußert geringfügigen Abweichungen zwischen dem späteren Verlauf der Spanngliedachse und dem Verlauf der Achse der Durchgangsöffnungen. Ein Knicken sowie ein Anliegen der Spannglieder 2 an den Wandungen der Durchgangsöffnungen bzw. der Hüllrohre 12a kann hierdurch weitgehend vermieden werden, so dass es nicht mehr zu Beschädigungen der Spannglieder 2 kommen kann.

Die Erfindung ist nicht auf die dargestellten Ausführungsbeispiele beschränkt. Abwandlungen und Kombinationen im Rahmen der Patentansprüche, soweit technisch möglich und sinnvoll, fallen ebenfalls unter die Erfindung.

### Bezugszeichenliste

- 1: Betonfundament
- 2: Spannglied
- 3: Windkraftturm
- 4: Betonfertigteil
- 5: Sauberkeitsschicht
- 6: Messpunkt
- 7: Schalung
- 8: Schalboden
- 9: Schalwand
- 10: Fundamentkörper
- 11: Ausnehmung
- 12: Kernelement
- 12a: Hüllrohr
- 13: erste Positionierhilfe
- 14: Volumenkörper der ersten Positionierhilfe
- 15: Einrichtungsfläche
- 16: Adaptervorrichtung der ersten Positionierhilfe
- 17: Referenzabschnitt
- 17a: Aufnahme für Messreflektor
- 18: Messreflektor
- 18a: Messkugel
- 18b: Messprisma
- 19: zweite Positionierhilfe
- 20: Adaptervorrichtung der zweiten Positionierhilfe
- 21: Kernelementlängsachse
- 22: Unterkante des Kernelements
- 23: Oberkante des Kernelements
- 24: Bewehrung
- 25: Fixierstück
- 26: Ankerplatte
- 27: Befestigungsbohrungen
- 28: Befestigungsposition
- 29: Bodenplatte
- 30: Mittelpunkt
- 31: Referenzpunkt
- 32: Höhenbezugsebene
- 33: Anschlag

- SHSB: Sollhöhe Schalboden und erste Positionierhilfe
- SHUK: Sollhöhe Unterkante Kernelement
- SHOK: Sollhöhe Oberkante Kernelement
- SLR: Radiale Solllage
- SLW: Winkelsolllage
- W: Winkel der Kernelementlängsachse
- FH: maximale Füllhöhe der Schalung
- A: Abstand
- W: Winkel

## Patentansprüche

1. Verfahren zur Herstellung eines Betonfundaments (1) für einen mittels Spanngliedern (2) vorgespannten Windkraftturm (3), insbesondere einen extern vorgespannten Windkraftturm (3) aus Betonfertigteilen (4), bei welchem eine Schalung (7) für das Betonfundament (1) errichtet wird, bei welchem Kernelemente (12) zur Herstellung von Durchgangsöffnungen in dem Betonfundament (1) für die Spannglieder (2) an der Schalung (7) positioniert und fixiert werden, und bei welchem danach das Betonfundament (1) gegossen wird,
**dadurch gekennzeichnet, dass** zur Positionierung der Kernelemente wenigstens eine erste Positionierhilfe (13) mit einer Adaptervorrichtung (16) für ein Kernelement (12) und mit wenigstens einem Referenzabschnitt (17), insbesondere einer Aufnahme (17a) für einen Messreflektor (18), an der Schalung (7) bereitgestellt wird, dass die erste Positionierhilfe (13) mittels des Referenzabschnitts (17) lagegenau in der Schalung (7) positioniert und fixiert wird, und dass das jeweils zu positionierende Kernelement (12) an der Adaptervorrichtung (16) der Positionierhilfe (13) angeordnet wird.

2. Verfahren nach dem vorhergehenden Anspruch, **dadurch gekennzeichnet, dass** zur Positionierung der Kernelemente (12) ein Messbezugssystem eingerichtet wird, dass die wenigstens eine erste Positionierhilfe (13) mittels des Referenzabschnitts (17) lagegenau anhand von für den Referenzabschnitt (17) vorgegebenen Sollkoordinaten in dem Messbezugssystem eingemessen und in der Schalung (7) fixiert wird, und dass das jeweils zu positionierende Kernelement (12) durch Anordnung an der Adaptervorrichtung (16) der Positionierhilfe (13) zumindest mit seinem unteren Ende lagegenau in einer vorgesehenen Befestigungsposition (28) positioniert wird.

3. Verfahren nach einem der vorhergehenden Ansprüche, **dadurch gekennzeichnet, dass** zumindest ein ebener Schalboden (8) für das Betonfundament (1) vorzugsweise parallel zu einer Höhenbezugsebene (32) des Messsystems errichtet wird, der Schalboden (8) auf seine vorgegebene Sollhöhe (SHSB) eingerichtet wird und auf dem in seiner Sollhöhe (SHSB) eingerichteten Schalboden (8) die wenigstens eine Positionierhilfe (13) bereitgestellt wird und hierdurch eine Unterkante (22) des jeweils zu positionierenden Kernelements (12) in ihrer Sollhöhe (SHUK) positioniert wird.

4. Verfahren nach dem vorhergehenden Anspruch, **dadurch gekennzeichnet, dass** die in ihrer Sollhöhe (SHSB) positionierte Positionierhilfe (13) mittels wenigstens zweier Referenzabschnitte (17) in ihrer Radial- (SLR) und Winkelsolllage (SLW) positioniert und dann fixiert wird, und dass danach das jeweils zu positionierende Kernelement (12) an der jeweiligen Adaptervorrichtung (16) angeordnet, insbesondere eingesetzt oder aufgesteckt, wird.

5. Verfahren nach einem der vorhergehenden Ansprüche, **dadurch gekennzeichnet, dass** für die Referenzabschnitte (17) Sollkoordinaten vorgegeben werden und die Positionierhilfe (13) lagegenau entsprechend der für die Referenzabschnitte (17) vorgegebenen Sollkoordinaten eingemessen und in der Schalung (7) fixiert wird.

6. Verfahren nach einem der vorhergehenden Ansprüche, **dadurch gekennzeichnet, dass** eine zweite Positionierhilfe (19) mit einer zweiten Adaptervorrichtung (20) für das Kernelement (12) und mit wenigstens einem Referenzabschnitt (17), insbesondere einer Aufnahme (17a) für einen Messreflektor (18), an dem oberen Ende des jeweils zu positionierenden Kernelements (12) festgelegt wird, insbesondere in die Aufnahme (17a) eingesetzt wird, und dass mittels des wenigstens einen Referenzabschnitts (17) das obere Ende des jeweils zu positionierenden Kernelements (12) und/oder eine Kernelementlängsachse (21) entsprechend ihres vorgegebenen Winkels (W) ausgerichtet wird.

7. Verfahren nach Anspruch 6, **dadurch gekennzeichnet, dass** vor dem Ausrichten der Kernelementlängsachsen (21) eine Bewehrung (24) in der Schalung (7) festgelegt wird und dass die in dem vorgegebenen Winkel (W) ausgerichteten Kernelemente (12) an der Bewehrung (24) fixiert werden, wobei vorzugsweise
vor dem Festlegen der Bewehrung (24) zumindest eine Schalwand (9) auf dem ersten Schalboden (8) errichtet wird.

8. Verfahren nach einem der vorhergehenden Ansprüche, **dadurch gekennzeichnet, dass** die Kernelementachsen (21) um einen spitzen Winkel (W), insbesondere um einen spitzen Winkel (W) von bis zu 15°, gegenüber der Lotrechten in Richtung des Fundamentmittelpunkts (30) verschwenkt ausgerichtet werden.

9. Verfahren nach einem der vorhergehenden Ansprüche, **dadurch gekennzeichnet, dass** nach erfolgter, vollständiger Positionierung der Kernelemente (12) in Bezug auf ihre Lage und auf ihre Kernelementlängsachse (21) jeweils eine Isthöhe einer Oberkante (23) der Kernelemente (12) vermessen wird und dass beim Betonieren des Fundaments (1) aus den Isthöhen der Oberkanten (23) eine maximale Füllhöhe (FH) der Schalung (7) bestimmt wird.

10. Verfahren nach einem der vorhergehenden Ansprüche, **dadurch gekennzeichnet, dass** nach vollständiger Ausrichtung der Kernelemente (12) in Bezug auf ihre Lage und ihre Kernelementlängsachse (21) die Schalung (7) vervollständigt wird und das Betonfundament (1) gegossen wird, wobei zumindest die erste Positionierhilfe (13) einen Teil der Schalung (7) bildet.

11. Betonfundament (1) für einen mittels Spanngliedern (2) vorgespannten Windkraftturm (3), insbesondere für einen extern vorgespannten Windkraftturm (3) aus Betonfertigteilen (4), **dadurch gekennzeichnet, dass** das Betonfundament (1) nach einem Verfahren nach einem der vorhergehenden Ansprüche hergestellt ist.

12. Betonfundament (1) für einen mittels Spanngliedern (2) vorgespannten Windkraftturm (3), insbesondere für einen extern vorgespannten Windkraftturm (3) aus Betonfertigteilen (4), **dadurch gekennzeichnet, dass** das Betonfundament (1) in für eine Befestigung des Windkraftturms (3) vorgesehenen Befestigungspositionen (28) in das Betonfundament (1) eingegossene Hüllrohre (12) für Spannglieder (2) aufweist, welche jeweils als einteilige Hüllrohre (12) mit konstantem Querschnitt ausgeführt sind.

13. Windkraftturm (3), insbesondere ein Windkraftturm (3) aus Betonfertigteilen (4), der mittels Spanngliedern (2) vorgespannt, insbesondere extern vorgespannt, ist, **dadurch gekennzeichnet, dass** er ein Betonfundament (1) nach einem der Ansprüche 11 oder 12 aufweist.

14. Positioniervorrichtung zur Ausrichtung von Kernelementen (12) in einem Betonfundament (1), insbesondere einem Betonfundament (1) für einen mittels Spanngliedern (2) vorgespannten Windkraftturm (3), insbesondere einen extern vorgespannten Windkraftturm (3) aus Betonfertigteilen (4), **dadurch gekennzeichnet, dass** die Positioniervorrichtung wenigstens eine erste Positionierhilfe (13) mit einer Adaptervorrichtung (16) für ein Kernelement (12) und mit wenigstens einem Referenzabschnitt (17), insbesondere einer Aufnahme (17a) für einen Messreflektor (18), zum Einmessen der ersten Positionierhilfe (13) umfasst.

15. Positioniervorrichtung nach dem vorhergehenden Anspruch, **dadurch gekennzeichnet, dass** die erste Positionierhilfe (13) einen vorzugsweise CNC-gefrästen Volumenkörper (14) aufweist, welcher unterseitig eine plane Einrichtungsfläche (15) aufweist und/oder in welchem oberseitig die Adaptervorrichtung (16) und/oder der wenigstens eine Referenzabschnitt (17) eingearbeitet, vorzugsweise eingefräst, sind.

16. Positioniervorrichtung nach einem der Ansprüche 14 bis 15, **dadurch gekennzeichnet, dass** die Positioniervorrichtung eine zweite Positionierhilfe (19) mit einer zweiten Adaptervorrichtung (20) für das Kernelement (12) und mit wenigstens einem Referenzabschnitt (17), insbesondere einer Aufnahme (17a) für einen Messreflektor (18), zum Einmessen der zweiten Positionierhilfe (19) aufweist.

17. Positioniervorrichtung nach einem der Ansprüche 14 bis 16, **dadurch gekennzeichnet, dass** die erste und/oder die zweite Adaptervorrichtung (16, 20) für das Kernelement (12) jeweils durch einen aus der Oberfläche der jeweiligen Positionierhilfe (13, 19) herausragenden Vorsprung ausgebildet ist, auf welchen das Kernelement (12) aufsteckbar ist oder welcher in das Kernelement (12) einsteckbar ist, wobei vorzugsweise zumindest die erste Adaptervorrichtung (16) für das Kernelement (12) in einem spitzen Winkel (W) gegenüber einer Senkrechten auf die unterseitige Einrichtungsfläche (15) der Positionierhilfe (13) orientiert ist, insbesondere in einem spitzen Winkel (W) von bis zu 15°.

## Claims

1. Method for manufacturing a concrete foundation (1) for a wind power tower (3) pre-stressed with tendons (2), especially an externally pre-stressed wind power tower (3) made of precast concrete parts (4), in which a formwork (7) for the concrete foundation (1) is erected, in which core elements (12) for making passage openings in the concrete foundation (1) for the tendons (2) are positioned and fixed in place on the formwork (7), and in which the concrete foundation (1) is subsequently cast,
**characterized in that**, for positioning the tendons, at least a first positioning aid (13) is supplied on the formwork (7) with an adapter device (16) for a core element (12) and with at least one reference segment (17), especially a seat (17a) for a measuring reflector (18) so that the first positioning aid (13) is positioned and fixed in place in the exact spot of the formwork (7) by means of the reference segment (17), and that the respective core element (12) to be positioned is arranged on the adapter device (16) of the positioning aid (13).

2. Method according to the preceding claim, **characterized in that** a measuring reference system is set up for positioning the core elements (12), that at least a first positioning aid (13) is calibrated in the exact position by means of target coordinates in the measuring reference system prescribed for the reference segment (17) and fixed in place in the formwork (7), and that the respective core element (12) to be positioned is positioned by arranging it on the adapter device (16) of the positioning aid (13) with its lower end on the exact spot in a supplied fastening position (28).

3. Method according to one of the preceding claims, **characterized in that** at least one flat formwork bottom (8) for the concrete foundation (1) is preferably erected parallel to a height reference plane (32) of the measurement system, the formwork bottom (8) is built on its prescribed target height (SHSB) and at least one positioning aid (13) is supplied on the formwork bottom (8) built at its target height (SHSB) and, as a result of that, a lower edge (22) of the respective core element (12) to be positioned is positioned at its target height (SHUK).

4. Method according to the preceding claim, **characterized in that** the positioning aid (13) positioned at its target height (SHSB) is positioned and then fixed in place in its radial (SLR) and angular target position (SLW) by means of two reference segments (17), and that afterwards the respective core element (12) to be positioned on the corresponding adapter device (16) is arranged, especially inserted or attached.

5. Method according to one of the preceding claims, **characterized in that** target coordinates are prescribed for the reference segments (17) and the positioning aid (13) is calibrated in the exact spot according to the target coordinates prescribed for the reference segments (17) and fixed in place in the formwork (7).

6. Method according to one of the preceding claims, **characterized in that** a second positioning aid (19) with a second adapter device (20) for the core element (12) and at least one reference segment (17), especially a seat (17a) for a measuring reflector (18) is fixed on the upper end of the respective core element (12) to be positioned, especially in the seat (17a), and that by means of the at least one reference segment (17), the upper end of the respective core element (12) to be positioned and/or a core element longitudinal axis (21) is/are oriented according to its prescribed angle (W).

7. Method according to claim 6, **characterized in that** before the core element longitudinal axes (21) are oriented, a reinforcement (24) is fixed in the formwork (7) and the core elements (12) oriented at the prescribed angle (W) are fixed to the reinforcement (24), wherein preferably
before the reinforcement (24) is fixed, at least one formwork wall (9) is erected on the first formwork bottom (8).

8. Method according to one of the preceding claims, **characterized in that** the core element axes (21) are oriented pivoted around an acute angle (W), especially around an acute angle (W) of up to 15°, with respect to the vertical in the direction of the foundation center (30).

9. Method according to one of the preceding claims, **characterized in that** after the core elements (12) have been fully positioned with respect to their position and on their core element axis (21), one actual height of an upper edge (23) of the core elements (12) is measured in each case and when the foundation (1) is concreted, a maximum filling height (FH) of the formwork (7) is determined from the actual heights of the upper edges (23).

10. Method according to one of the preceding claims, **characterized in that** after the core elements (12) have been fully oriented with respect to their position and their core element longitudinal axis (21), the formwork (7) is completed and the concrete foundation (1) is cast, at least the first positioning aid (13) forming a part of the formwork (7).

11. Concrete foundation (1) for a pre-stressed wind power tower (3) pre-stressed by means of tendons (2), especially for an externally pre-stressed wind power tower (3) made of precast concrete parts (4), **characterized in that** the concrete foundation (1) is manufactured employing a method according to one of the preceding claims.

12. Concrete foundation (1) for a pre-stressed wind power tower (3) pre-stressed by means of tendons (2), especially for an externally pre-stressed wind power tower (3) made of precast concrete parts (4), **characterized in that** the concrete foundation (1) has jacket pipes (12) intended for tendons (2) which jacket pipes (12) are cast into the concrete foundation (1) in fastening positions (28) for fastening the wind power tower (3), and the tendons are in each case executed as one-part jacket pipes (12) having a constant cross section.

13. Wind power tower (3), especially a wind power tower (3) made of precast concrete parts (4), which is pre-stressed with tendons (2), especially pre-stressed in the exterior, **characterized in that** it has a concrete foundation (1) according to one of the claims 11 or 12.

14. Positioning device for orienting core elements (12) in a concrete foundation (1), especially a concrete foundation (1) for a wind power tower (3) pre-stressed by means of tendons (2), especially an externally pre-stressed wind power tower (3) made of precast concrete parts (4), **characterized in that** the positioning device has at least one positioning aid (13) with an adapter device (16) for a core element (12) and with at least one reference segment (17), especially a seat (17a) for a measuring reflector (18) for calibrating the first positioning aid (13).

15. Positioning device according to the preceding claim, **characterized in that** the first positioning aid (13) has preferably a CNC-milled solid body (14), which has a flat installation surface (15) on its lower side and/or in which the adapter device (16) and/or the at least one reference segment (17) has been incorporated, preferably milled, into the upper side.

16. Positioning device according to one of the claims 14 to 15,
**characterized in that** the positioning device has a second positioning aid (19) with a second adapter device (20) for the core element (12) and with at least one reference segment (17), especially a seat (17a) for a measuring reflector (18) for calibrating the second positioning aid (19).

17. Positioning device according to one of the claims 14 to 16,
**characterized in that** the first and/or second adapter device (16, 20) for the core element (12) is in each case formed by a projection protruding from the surface of the corresponding positioning aid (13, 19) on which the core element (12) can be attached or which can be inserted in the core element (12), wherein preferably at least the first adapter device (16) for the core element (12) is oriented in an acute angle (W) with respect to a perpendicular on the underside installation surface (15) of the positioning aid (13), especially in an acute angle (W) of up to 15°.

## Revendications

1. Procédé pour réaliser une fondation en béton (1) pour une tour d'éolienne (3) précontrainte au moyen de membres de précontrainte (2), en particulier une tour d'éolienne (3) précontrainte de l'extérieur, en éléments en béton préfabriqués (4), dans lequel un coffrage (7) est édifié pour la fondation en béton (1), dans lequel des éléments d'âme (12) sont positionnés et fixés dans le coffrage (7) pour la réalisation d'ouvertures de passage dans la fondation en béton (1) pour les membres de précontrainte (2) et dans lequel la fondation en béton (1) est ensuite coulée,
**caractérisée en ce que** pour le positionnement des éléments d'âmes, au moins une première aide au positionnement (13) avec un dispositif d'adaptation (16) pour un élément d'âme (12) et avec au moins un segment de référence (17), en particulier un logement (17a) pour un réflecteur de mesure (18), est fournie au coffrage (7), que la première aide au positionnement (13) est positionnée et fixé à position exacte dans le coffrage (7) à l'aide du segment de référence (17) et que l'élément d'âme (12) devant respectivement être positionné est disposé au dispositif d'adaptation (16) de l'aide au positionnement (13).

2. Procédé selon la revendication précédente, **caractérisé en ce que** pour le positionnement des éléments d'âmes (12), un système de référence de mesure est dressé, que l'au moins une première aide au positionnement (13) est calibrée à position exacte dans le système de référence de mesure et fixé dans le coffrage (7) à l'aide du segment de référence (17) sur la base de coordonnées nominales allouées pour le segment de référence (17), et que l'élément d'âme (12) devant respectivement être positionné est positionné à position exacte, au moins par son extrémité inférieure, dans une position de fixation (28) prédéterminée, par positionnement au dispositif d'adaptation (16) de l'aide au positionnement (13).

3. Procédé selon l'une des revendications précédentes, caractérisé en ce qu'au moins un fond de coffrage (8) plan pour la fondation en béton (1) est réalisé de préférence parallèlement à un plan de référence de hauteur (32) du système de mesure, le fond de coffrage (8) est réalisé à son hauteur théorique (SHSB) et l'au moins une aide au positionnement (13) est fournie sur le fond de coffrage (8) réalisé à son hauteur théorique (SHSB) et, de ce fait, un bord inférieur (22) de l'élément d'âme (12) devant respectivement être positionné est positionné à son hauteur théorique (SHUK).

4. Procédé selon la revendication précédente, **caractérisé en ce que** l'aide au positionnement (13) positionnée à son hauteur théorique (SHSB) est positionnée puis fixée dans sa position théorique radiale (SLR) et angulaire (SLW) à l'aide d'au moins deux segments de référence (17), et qu'ensuite, l'élément d'âme (12) devant respectivement être positionné est disposé au dispositif d'adaptation (16) respectif, en particulier inséré ou embroché.

5. Procédé selon l'une des revendications précédentes, **caractérisé en ce que** des coordonnées nominales sont allouées pour les segments de référence (17) et l'aide au positionnement (13) est calibrée à position exacte et fixée dans le coffrage (7) sur la base des coordonnées nominales allouées pour les segments de référence (17).

6. Procédé selon l'une des revendications précédentes, caractérisé en ce qu'une seconde aide au positionnement (19) avec un second dispositif d'adaptation (20) pour l'élément d'âme (12) et avec au moins un segment de référence (17), en particulier un logement (17a) pour un réflecteur de mesure (18), est calée à l'extrémité supérieure de l'élément d'âme (12) devant respectivement être positionné, en particulier insérée dans le logement (17a), et qu'à l'aide de l'au moins un segment de référence (17), l'extrémité supérieure de l'élément d'âme (12) devant respectivement être positionné et/ou un axe longitudinal (21) d'élément d'âme est aligné en fonction de son angle (W) alloué.

7. Procédé selon la revendication 6, caractérisé en ce qu'avant l'alignement des axes longitudinaux (21) d'élément d'âme, une armature (24) est calée dans le coffrage (7) et que les éléments d'âme (12) alignés dans l'angle alloué (W) sont fixés sur l'armature (24), sachant que, de préférence
avant le calage de l'armature (24), au moins une paroi de coffrage (9) est réalisée sur le premier fond de coffrage (8).

8. Procédé selon l'une des revendications précédentes, **caractérisé en ce que** les axes (21) d'éléments d'âme sont alignés pivotés en angle (W) aigu, en particulier en angle (W) aigu allant jusqu'à 15°, par rapport à la verticale dans la direction du point central (30) de la fondation.

9. Procédé selon l'une des revendications précédentes, caractérisé en ce qu'après l'achèvement intégral du positionnement des éléments d'âme (12) par rapport à leur position et à leur axe longitudinal (21) d'éléments d'axe, une hauteur théorique respective d'un bord supérieur (23) des éléments d'âme (12) est mesurée et que lors du bétonnage de la fondation (1), un niveau de remplissage (FH) maximal du coffrage (7) est déterminé à partir des hauteurs théoriques des bords supérieurs (23).

10. Procédé selon l'une des revendications précédentes, caractérisé en ce qu'après l'alignement intégral des éléments d'âme (12) par rapport à leur position et à leur axe longitudinal (21) d'éléments d'axe, le coffrage (7) est complété et la fondation en béton (1) est coulée, sachant qu'au moins la première aide au positionnement (13) forme une partie du coffrage (7).

11. Fondation en béton (1) pour une tour d'éolienne (3) précontrainte au moyen de membres de précontrainte (2), en particulier une tour d'éolienne (3) précontrainte de l'extérieur, en éléments en béton préfabriqués (4), **caractérisée en ce que** la fondation en béton (1) est réalisée selon un procédé selon l'une des revendications précédentes.

12. Fondation en béton (1) pour une tour d'éolienne (3) précontrainte au moyen de membres de précontrainte (2), en particulier une tour d'éolienne (3) précontrainte de l'extérieur, en éléments en béton préfabriqués (4), **caractérisée en ce que** la fondation en béton (1) comporte à des positions de fixation (28) prévues pour la fixation de la tour d'éolienne (3) des tubes de gainage (12) enrobés dans la fondation en béton (1) pour les membres de précontrainte (2), qui se présentent respectivement sous la forme de tubes de gainage (12) en une pièce avec section transversale constante.

13. Tour d'éolienne (3), en particulier tour d'éolienne (3) en éléments en béton préfabriqués (4), qui est précontrainte à l'aide d'éléments de précontrainte (2), en particulier de l'extérieur, caractérisée en ce qu'elle comporte une fondation en béton (1) selon l'une des revendications 11 ou 12.

14. Dispositif de positionnement pour l'alignement d'éléments d'âme (12) dans une fondation en béton (1), en particulier une fondation en béton (1) pour une tour d'éolienne (3) précontrainte à l'aide de membres de précontrainte (2), en particulier une tour d'éolienne (3) précontrainte de l'extérieur, en éléments en béton préfabriqués (4), **caractérisé en ce que** le dispositif de positionnement comporte au moins une première aide au positionnement (13) avec un dispositif d'adaptation (16) pour un élément d'âme (12) et avec au moins un segment de référence (17), en particulier un logement (17a) pour un réflecteur de mesure (18), pour le calibrage de la première aide au positionnement (13).

15. Dispositif de positionnement selon la revendication précédente, **caractérisé en ce que** la première aide au positionnement (13) comporte un corps volumique (14) fraisé de préférence à commande numérique CNC, lequel présente sur sa face inférieure une surface d'installation (15) plane et/ou dans lequel, sur la face supérieure, le dispositif d'adaptation (16) et/ou l'au moins un segment de référence (17) est/sont incorporé(s), de préférence fraisé(s).

16. Dispositif de positionnement selon l'une des revendications 14 à 15, **caractérisé en ce que** le dispositif de positionnement comporte une seconde aide au positionnement (19) avec un second dispositif d'adaptation (20) pour l'élément d'âme (12) et avec au moins un segment de référence (17), en particulier un logement (17a) pour un réflecteur de mesure (18), pour le calibrage de la seconde aide au positionnement (19).

17. Dispositif de positionnement selon l'une des revendications 14 à 16, **caractérisé en ce que** le premier et/ou le second dispositif d'adaptation (16, 20) pour l'élément d'âme (12) est/sont respectivement formé(s) par une protubérance faisant saillie sur la surface de l'aide au positionnement (13, 19) respective, sur laquelle peut être embroché l'élément d'âme (12) ou qui peut être inséré dans l'élément d'âme (12), sachant que de préférence au moins le premier dispositif d'adaptation (16) pour l'élément d'âme (12) est orienté en angle aigu (W) par rapport à la verticale vers la surface d'installation (15) de face inférieure de l'aide au positionnement (13), en particulier en un angle aigu (W) allant jusqu'à 15°.
